# EUROPÄISCHE PATENTSCHRIFT

(11) **EP 0 405 162 B1**
(45) Veröffentlichungstag und Bekanntmachung des Hinweises auf die Patenterteilung: **06.07.1994**
(21) Anmeldenummer: 90110220.2
(22) Anmeldetag: 30.05.1990
(51) Int. Cl.: G01N 21/07, G01N 35/02

(54) **Küvettenrotor**
Cellrotor
Rotor des cuves

(30) Priorität: 01.06.1989 DE 3917866
(43) Veröffentlichungstag der Anmeldung: 02.01.1991
(73) Patentinhaber: BEHRINGWERKE Aktiengesellschaft, 35001 Marburg (DE)
(72) Erfinder: Bouchee, Bernhard, D-6238 Hofheim am Taunus (DE); Fickenscher, Karl, Dr., D-3550 Marburg (DE)

(56) Entgegenhaltungen:
- EP-A- 0 163 038
- EP-A- 0 262 497

## Beschreibung

Die Erfindung betrifft einen Küvettenrotor mit einzelnen, radial angeordneten Küvetten wie er in automatisch arbeitenden Zentrifugen Analysensystemen zur Untersuchung von biologischen Flüssigkeiten wie z.B. Blut, Blutplasma oder Blutserum eingesetzt werden kann.

Die biologischen Flüssigkeiten werden vor der Analyse gegebenenfalls verdünnt und für das Feststellen bestimmter Eigenschaften oder Inhaltsstoffe mit spezifischen Reagenzien wie sie z.B. für PT, aPTT, Fibrinogen, Faktor II-XII Tests benötigt werden, vermischt und das Reaktionsergebnis optisch erfaßt.

Ein Küvettenrotor für solche Analysen ist nach europäischer Patentanmeldung 0 163 038 bekannt. Die einzelnen, kreisförmig angeordneten Küvetten erstrecken sich radial und sind allseitig geschlossen. Sie weisen jeweils zwei Kammern auf, die durch einen Damm voneinander getrennt und mit einer Öffnung zum Füllen versehen sind. In der zur Drehachse hin angeordneten Kammer wird biologische Flüssigkeit und in der peripher angeordneten Kammer spezifisches Reagenz und gegebenenfalls Verdünnungsmittel vorgelegt, die sich mit der biologischen Flüssigkeit mischen und reagieren sobald letztere durch die Wirkung der Zentrifugalkräfte über den Damm in die peripher angeordnete Kammer gelangt. Die optische Messung erfolgt senkrecht zur Rotorebene bei fester Schichtdicke der zur analysierenden Flüssigkeit.

Der Erfindung liegt die Aufgabe zugrunde, einen Küvettenrotor der genannten Art zu schaffen, bei dem jede Küvette drei Kammern aufweist, die Möglichkeit besteht, sowohl bei gegebener fester als auch bei variabler Schichtdicke des Reaktionsansatzes zu photometrieren. Darüberhinaus sollen auf dem Rotor weitere, von den einzelnen Küvetten unabhängige Kammern zum Verdünnen von Proben angeordnet sein.
Die Aufgabe wird durch einen Küvettenrotor gelöst, in den die Küvetten in ihrer radialen Ausdehnung von im wesentlichen parallel zueinander stehenden, seitlichen Wänden, einem Oberteil und einem Unterteil begrenzt sind und drei durch auf dem Unterteil angeordneten Dämme getrennte Kammern aufweisen, wobei in die mittlere und in die peripher angeordnete Kammer mindestens je ein am Oberteil befestigter Abweiser hineinragt und zwischen den einzelnen Küvetten jeweils ein allseitig geschlossenes Gefäß ausgebildet ist, dessen Innenraum mit einer Öffnung im Oberteil in Verbindung steht.

Die peripher angeordneten Kammern können in radialer Richtung hintereinander liegende Abschnitte mit unterschiedlichem Querschnitt aufweisen, wobei der Querschnitt des an der Peripherie gelegenen Abschnitts der kleinste ist. Die in die peripher angeordneten Kammern ragenden Abweiser können als Umlenkeinrichtungen für Licht ausgebildet sein. Weiterhin können die peripher angeordneten Kammern von den mittleren Kammern durch zwei Dämme getrennt sein, die sich in geringem Abstand gegenüberstehen. In einer weiteren Ausführungsform sind die Kammern durch Zwischenwände, die mindestens die halbe Breite der Kammern abdecken und Dame voneinander getrennt, die zwischen den Zwischenwänden und den Seitenwänden angeordnet sind.

Die Vorteile der Erfindung sind in erster Linie darin zu sehen, daß Probe und Reagenzien separat vorgelegt werden können, der Rotor Gefäße zum Verdünnen von Proben aufweist, die raumsparend zwischen den Küvetten angeordnet sind, und die Schichtdicke für die Durchstrahlung bei geringen Extinktionswerten vergrößert werden kann.

Im folgenden wird der Küvettenrotor anhand von lediglich einen Ausführungsweg darstellenden Zeichnungen naher erläutert. Es zeigt
Figur 1 einen Ausschnitt des Küvettenrotors von oben ohne Oberteil,
Figur 2 den Schnitt II-II von Figur 1 mit Oberteil,
Figur 3 den Schnitt III-III von Figur 1 mit Oberteil,
Figur 4 die Meßanordnung für die Messung mit fester Schichtdicke bzw. variabler Schichtdicke,
Figur 5 eine Variante einer einzelnen Küvette von oben und
Figur 6 den Schnitt VI-VI von Figur 5.

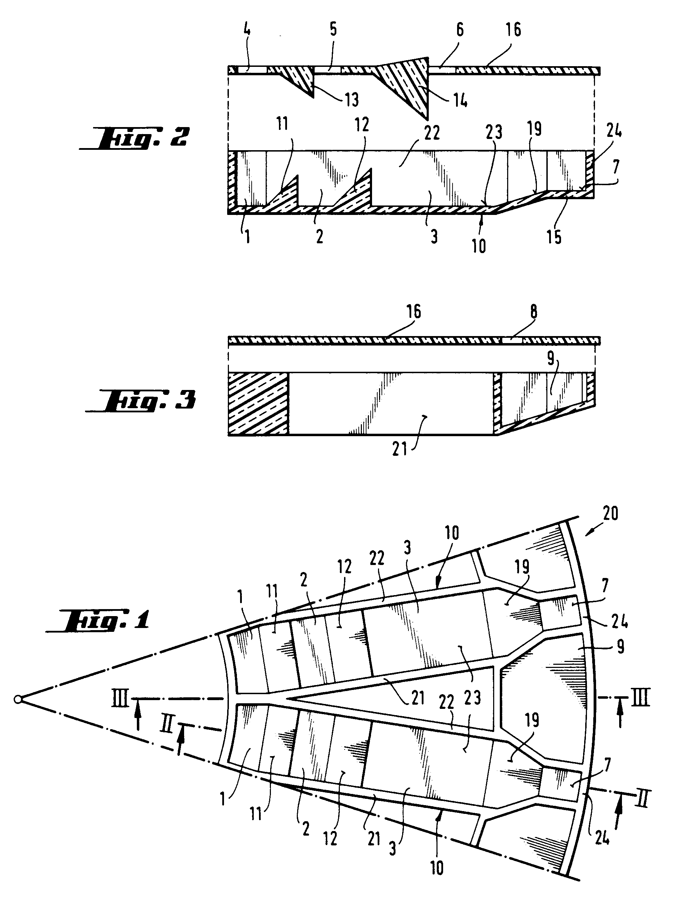

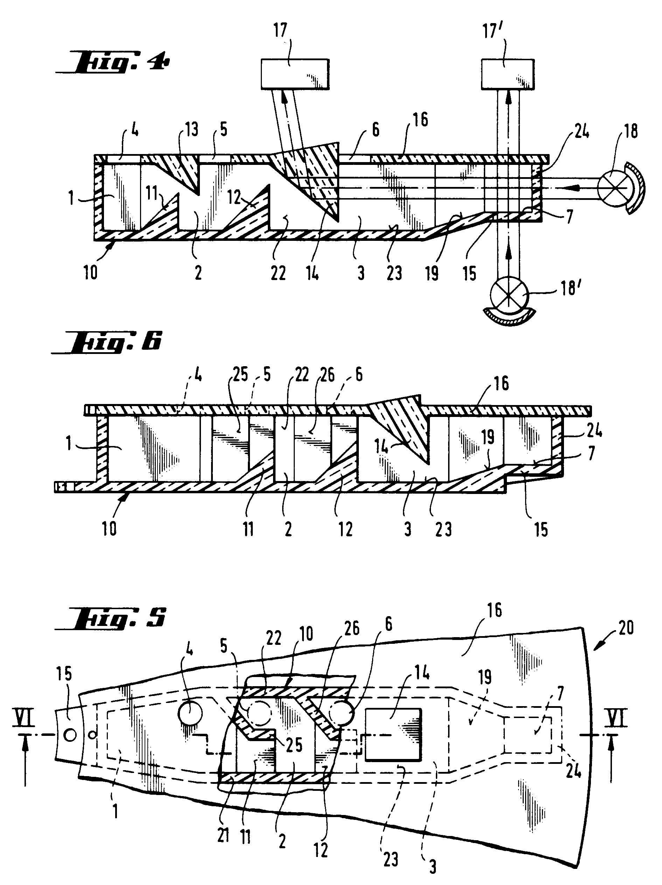

Der Küvettenrotor 20 besteht aus allseitig geschlossenen Küvetten 10, die von im wesentlichen parallel zueinander stehenden Wänden 21, 22, einem Oberteil 16 und einem Unterteil 15 begrenzt sind. Die einzelnen Küvetten 10 weisen je drei Kammern 1, 2, 3 auf, die durch Dämme 11, 12 voneinander getrennt sind. Die Dämme 11, 12 sind auf dem Unterteil 15 angeordnet. Die Dämme 11, 12 sind so gestaltet, daß zum einen bei dem geforderten Kammervolumen ein Überlauf in die Nachbarkammer nicht stattfinden kann, zum anderen beim Zentrifugieren eine Abrißkante entsteht, die die Vermischung der Reaktionspartner günstig beeinflußt. Das Oberteil 16 ist mit Öffnungen 4, 5, 6 versehen, über die der Innenraum der Kammern 1, 2, 3 zugänglich ist. Am Oberteil 16 sind ferner Abweiser 13, 14 angeordnet (Figur 2), die in die mittlere Kammer 2 und in die peripher angeordnete Kammer 3 hineinragen. Die Abweiser 13, 14 verhindern, daß Flüssigkeit, die an der Unterseite des Oberteils 16 entlangläuft, durch die Öffnungen 5 und 6 austritt. Außerdem entstehen weitere Abrißkanten, die die Vermischung der Reaktionspartner günstig beeinflussen. Der Zwischenraum zwischen den einzelnen Küvetten 10 ist als geschlossenes Gefäß 9 zum verdünnen von Proben ausgebildet. Sein Innenraum ist über Öffnung 8 im Oberteil 16 zugänglich (Figur 3). Um die Probenmenge klein zu halten, kann die peripher angeordnete Kammer 3 Abschnitte 7, 19 und 23 mit unterschiedlichem Querschnitt aufweisen, wobei der Querschnitt von Abschnitt 7 nur noch ein Bruchteil des Querschnitts von Abschnitt 23 beträgt. Die Querschnittsverringerung wird im wesentlichen durch Verjüngung des Abschnitts 19 in Richtung Peripherie erzielt. Im Abschnitt 7 sind die Wände 21, 23 und Ober- und Unterteil wieder parallel zueinander ausgerichtet. Abschnitt 7 dient als Meßraum für konstante Schichtdicke der Probe bei achsialer Messung und variabler Schichtdicke bei radialer Messung (Figur 4). Im Bereich von Abschnitt 7 sind Oberteil 16 und Unterteil 15 sowie die Stirnwand 24 der Küvetten 10 als optische Fenster ausgebildet. Ferner kann der Abweiser 14 als Umlenkeinrichtung für Licht ausgebildet sein. Der Strahlenverlauf des Lichtes für die Messung in achsialer und radialer Richtung ist in Figur 4 dargestellt. 18 und 18′ deuten die Lichtsender an, 17 und 17′ die Lichtempfänger und 14 den als Umlenkeinrichtung für Licht ausgebildeten Abweiser. Lichtsender und Lichtempfänger können selbstverständlich auch vertauscht sein. Zur Verbesserung der Vermischung der Reaktionspartner kann die peripher angeordnet Kammer 3 von der mittleren Kammer 2 durch zwei Dämme getrennt sein, die sich in geringem Abstand gegenüberstehen. Durch die Rotationsbewegung des Küvettenrotors bewegen sich die zunächst getrennt vorliegenden Reaktionspartner radial in Richtung Stirnwand 24, überlaufen dabei die Dämme 11, 12 und vermischen sich. Die Mischung füllt schließlich Abschnitt 7 der Küvette 10 (nicht dargestellt).

Bei der Ausführungsform gemäß Figuren 5 und 6 sind die Kammern 1,2,3 durch Zwischenwände 25,26, die sich mindestens über die halbe Kammerbreite erstrecken und Dämme 11,12 voneinander getrennt. Die Wände 25,26 verhindern, daß Flüssigkeit beim Zentrifugieren aus den Kammern 1 bzw. 2 durch die Öffnungen 5 bzw. 6 austreten kann. Sie ersetzen also die Abweiser 13.

## Patentansprüche

1. Küvettenrotor mit kreisförmig angeordneten und sich radial erstreckenden, einzelnen, allseits geschlossenen Küvetten, die eine Vielzahl von Kammern aufweisen, die durch Dämme voneinander getrennt sind, wobei jede Kammer eine Öffnung zum Füllen und zur Entnahme aufweist, wobei die Küvetten (10) in ihrer radialen Ausdehnung von im wesentlichen parallel zueinander stehenden seitlichen Wänden (21, 22), einem Oberteil (16) und einem Unterteil (15) begrenzt sind und drei durch auf dem Unterteil (15) angeordnete Dämme (11, 12) getrennte Kammern (1, 2, 3) aufweisen, wobei in die mittlere (2) und in die peripher angeordnete Kammer (3) mindestens je ein am Oberteil (16) befestigter Abweiser (13, 14) hineinragt und zwischen den einzelnen Küvetten (10) jeweils ein allseitig geschlossenes Gefäß (9) ausgebildet ist, dessen Innenraum mit einer Öffnung (8) im Oberteil (16) in Verbindung steht.

2. Küvettenrotor nach Anspruch 1, dadurch gekennzeichnet, daß die peripher angeordneten Kammern (3) Abschnitte (7, 19, 23) mit unterschiedlichem Querschnitt aufweisen, wobei der Querschnitt des an der Peripherie des Rotors gelegenen Abschnitts (7) der kleinste ist.

3. Küvettenrotor nach einem der Ansprüche 1 oder 2, dadurch gekennzeichnet, daß die in die peripher angeordneten Kammern (3) ragenden Abweiser (14) als Umlenkeinrichtungen für Licht ausgebildet sind.

4. Küvettenrotor nach einem der Ansprüche 1 bis 3, dadurch gekennzeichnet, daß die peripher angeordneten Kammern (3) von den mittleren Kammern (2) durch zwei Dämme getrennt sind, die sich in geringem Abstand gegenüberstehen.

## Claims

1. A cuvette rotor with circularly arranged and radially extending, separate cuvettes which are closed on all sides and have a plurality of chambers which are separated from one another by barriers, each chamber having an opening for filling and removal, the cuvettes (10) being bounded in their radial dimension by side walls (21, 22) which are essentially parallel to one another and by an upper part (16) and a lower part (15), and having three chambers (1, 2, 3) separated by barriers (11, 12) arranged on the lower part (15), there being, projecting into the central (2) and into the peripherally arranged chamber (3), in each case at least one deflector (13, 14) fixed to the upper part (16), and a vessel (9) which is closed on all sides is formed between each of the separate cuvettes (10) and its interior is connected to an opening (8) in the upper part (16).

2. A cuvette rotor as claimed in claim 1, wherein the peripherally arranged chambers (3) have sections (7, 19, 23) of different cross-section, with the cross-section of the section (7) located at the periphery of the rotor being the smallest.

3. A cuvette rotor as claimed in either of claims 1 or 2, wherein the deflectors (14) projecting into the peripherally arranged chambers (3) are designed as deflection devices for light.

4. A cuvette rotor as claimed in any of claims 1 to 3, wherein the peripherally arranged chambers (3) are separated from the central chambers (2) by two barriers which face one another at a small distance.

## Revendications

1. Rotor à cuvettes, comportant des cuvettes individuelles radiales, disposées suivant un cercle et fermées de tous côtés et qui possèdent une multiplicité de chambres qui sont séparées les unes des autres par des rebords, et dans lequel chaque chambre possède une ouverture pour le remplissage et pour le prélèvement, les cuvettes (10) sont limitées, dans leur étendue radiale, par des parois latérales (21, 22) sensiblement parallèles, par une partie supérieure (16) et par une partie inférieure (15), et comportent trois chambres (1, 2, 3) séparées par des rebords (11, 12) disposés sur la partie inférieure (15), et dans lequel au moins respectivement un déflecteur (13, 14) fixé à la partie supérieure (16) pénètre dans la chambre médiane (2) et dans la chambre disposée à la périphérie (3), et, entre les différentes cuvettes (10) est formé respectivement un récipient (9) fermé de tous côtés, dont l'espace intérieur est relié à une ouverture (8) ménagée dans la partie supérieure (16).

2. Rotor à cuvettes selon la revendication 1, caractérisé en ce que les chambres disposées à la périphérie (3) comportent des parties (7, 19, 23) possédant des sections transversales différentes, la section transversale de la section (7) située sur la périphérie du rotor étant la plus petite.

3. Rotor à cuvettes selon l'une des revendications 1 ou 2, caractérisé en ce que les déflecteurs (14), qui pénètrent dans les chambres (3) disposées à la périphérie sont réalisés sous la forme de dispositifs de renvoi pour la lumière.

4. Rotor à cuvettes selon l'une des revendications 1 à 3, caractérisé en ce que les chambres (3) disposées à la périphérie sont séparées des chambres centrales (2) par deux rebords, qui sont situés en vis-à-vis à une faible distance.
